# EUROPEAN PATENT APPLICATION

(11) **EP 1 267 536 A1**
(43) Date of publication of application: **18.12.2002**
(21) Application number: 01305149.5
(22) Date of filing: 13.06.2001
(51) Int. Cl.: H04L 27/26

(54) **Multicarrier receiver with detection of the transmission mode and length of the guard interval**

(71) Applicant: Conexant Systems, Inc., Newport Beach, California 92660-3095 (US)
(72) Inventor: Foxcroft, Thomas, Bristol BS8 3DT (GB); Pulley, Douglas Roger, Bath BA1 5JD (GB)
(74) Representative: O'Connell, David Christopher

(57) **Abstract**

A method for processing a received signal comprising a plurality of symbols, such as a COFDM DVB-T signal, to determine a size of a guard interval therein, in which a correlation function is formed from the received samples, the correlation function having peaks, and the separation between peaks in the correlation function depending on a total duration of a symbol plus a guard interval. The correlation function is passed through a plurality of resonators, each of the resonators having a respective resonance frequency which corresponds to a total duration of a symbol plus an available guard interval, and the size of the guard interval is determined as being the guard interval corresponding to the resonator with the highest output power.

The mode of the received signals can also be determined, by passing the correlation function through resonators which have respective resonance frequencies which correspond to a total duration of a symbol in an available mode, plus an available guard interval.

## Description

### TECHNICAL FIELD OF THE INVENTION

This invention relates to a receiver circuit, in particular for receiving signals in which a portion of a transmitted signal forms a guard interval.

### BACKGROUND OF THE INVENTION

The European DVB-T (Digital Video Broadcasting - Terrestrial) standard ETS 300 744 for digital terrestrial television (DTT) uses Coded Orthogonal Frequency Division Multiplexing (COFDM) of transmitted signals, which are therefore grouped into blocks and frames.

It is necessary to transmit the DTT signals over transmission paths which are of uncertain quality. In particular, the area close to the transmission path may include objects such as tall buildings, which cause reflections. That is, a signal may be received at a receiver twice, once on a direct path from the transmitter, and then, after a short delay, as an indirect reflected path. As is well known, this can cause inter-symbol interference (ISI) in the receiver. To minimize this problem, DVB-T COFDM signals include a cyclic prefix guard interval to each active symbol. Specifically, the end portion of the active symbol is repeated before the current active symbol.

These cyclic signals must be correctly removed before demodulation, or the demodulation performance can be seriously degraded.

The DVB-T standard defines two possible "modes" of operation, each of which has a specific active window size, which in turn defines the size of the Fast Fourier Transform (FFT) in the receiver, namely 2k mode and 8k mode. For each of these modes, the standard defines four possible guard lengths, which are fractions of the respective FFT length. The combination of FFT size and guard interval length can be chosen based on the anticipated multipath delay spread (which can be a function of transmission path topology and/or network topology in the case of a single frequency network (SFN)).

Before the cyclic signals can be removed, it is necessary to know the FFT size and the duration of the guard interval. However, the duration of the guard interval, at least, is not a constant value. The presence of the guard interval reduces the efficiency with which the transmission channel can be used, and so it is advantageous to vary the size of the guard interval to be the minimum allowed by the conditions.

The receiver must therefore include a mechanism for determining the size of the guard interval.

The chosen mechanism must be robust enough to deal with noisy signals, and with signals which suffer from multipath and co-channel interference.

### SUMMARY OF THE INVENTION

It is an object of the invention to provide a receiver circuit which overcomes some of the disadvantages of the prior art.

In particular, it may be advantageous for the receiver circuit to be able to determine the FFT size and guard interval size quickly, even in the case of received signals with relatively low signal-noise ratio.

More specifically, the invention relates to a method for processing a received signal comprising a plurality of symbols, to determine a size of a guard interval therein, in which a correlation function is formed from the received samples, the correlation function having peaks, and the separation between peaks in the correlation function depending on a total duration of a symbol plus a guard interval. The correlation function is passed through a plurality of resonators, each of the resonators having a respective resonance frequency which corresponds to a total duration of a symbol plus an available guard interval, and the size of the guard interval is determined as being the guard interval corresponding to the resonator with the highest output power.

The invention also relates to a receiver circuit which determines the size of the guard interval of a received signal in that way.

This provides a quick and robust way of determining the guard interval size.

In the preferred embodiment, the invention also relates to determining a mode of the received signals, by passing the correlation function through resonators which have respective resonance frequencies which correspond to a total duration of a symbol in an available mode, plus an available guard interval.

### BRIEF DESCRIPTION OF DRAWINGS

Figure 1 is a block schematic diagram of a receiver circuit according to the invention.
Figure 2 is a block schematic diagram of one component of the receiver circuit of Figure 1.

### DETAILED DESCRIPTION OF PREFERRED EMBODIMENTS

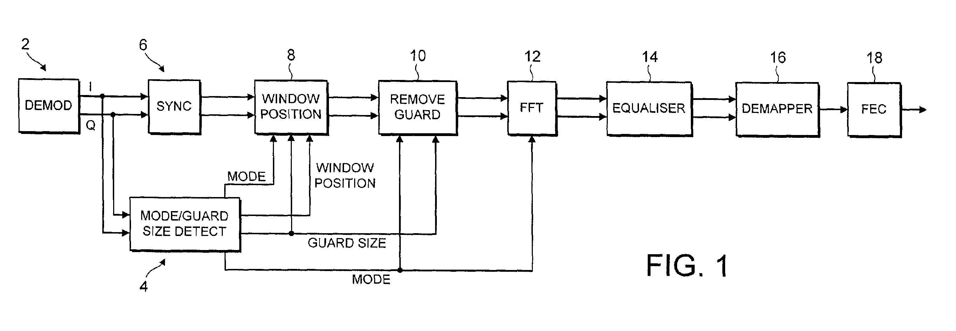

Figure 1 is a block diagram of a receiver circuit according to the invention. Typically, in the exemplary case of a digital terrestrial television signal receiver, for example receiving signals using the DVB-T standard with Coded Orthogonal Frequency Division Multiplexing, the receiver includes an antenna (not shown) and a tuner for receiving the signals. Received signals are supplied to a demodulator 2, which mixes the received RF input signal down to baseband in-phase (I) and quadrature (Q) components and produces digital samples. The baseband I and Q components are supplied to a mode and guard size detection block 4. The mode and guard size detection block 4 determines whether the received signal was transmitted in 2k or 8k mode, and also determines the guard size, as described in more detail below, and provides corresponding mode detection and guard size outputs, as well as a window position output.

The baseband I and Q components are also supplied to a synchroniser 6, which removes frequency and sampling rate offsets, and then to a window position block 8. Following determination of the window position, the received signals are applied to a guard removal block 10, FFT block 12, equaliser 14, demapper 16, and FEC block 18. The resulting MPEG data is output to a demultiplexing device for ultimate display, as is generally conventional. It will also be apparent that changes are possible to the form of the receiver circuit within the scope of the invention. For example, the order of blocks in the circuit can be changed.

The mode output, window position output and guard size output are supplied to the window position block 8, the mode output and guard size output are supplied to the guard removal block 10, and the mode output is supplied to the FFT block 12, allowing these latter blocks to operate accurately.

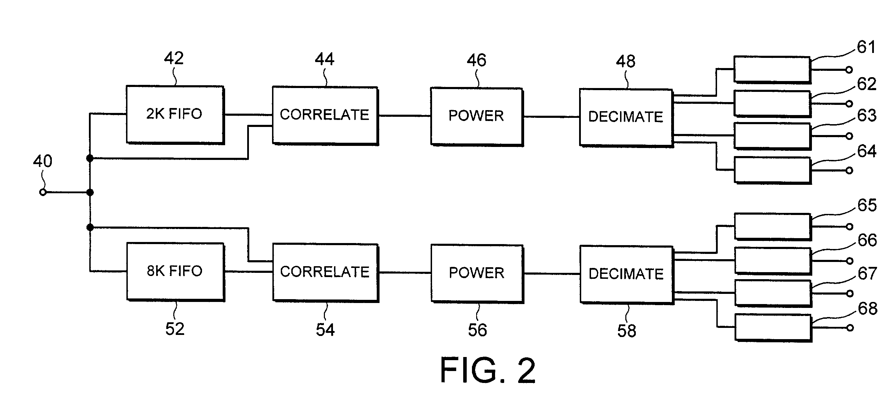

The mode and guard size detection block 4 is illustrated schematically in Figure 2.

In the DVB-T standard, there are two available carrier modes, namely 2k mode and 8k mode. In this context, 2k and 8k refer to the required effective size of the FFT block 12. In each of these carrier modes, there are four available guard intervals, namely 1/4, 1/8, 1/16 and 1/32 of the respective symbol duration. Some receivers are intended for use in transmission networks, in which only one of the available modes is used. In that case, it may not be necessary for the mode and guard size detection block 4 to provide an output which indicates the mode.

The I and Q samples of the received signal are supplied to an input terminal 40 of the mode and guard size detection block 4. The samples are supplied to a 2k size first-in first-out (FIFO) memory 42. The moving average correlation of the samples over a minimum guard period is then calculated in block 44, and the power of the correlation measured in block 46.

The correlation function is calculated in block 44 by multiplying each input symbol with the symbol obtained at the same time from the delay block 42 with the delay applied thereto, thereby obtaining a measure of the correlation between them. The results are then summed, and a running average is calculated over a number of samples g, which equals the smallest allowed guard interval size, that is, 1/32 of the FFT size. Thus, g=64 samples in 2k mode.

The blocks 44 and 46 therefore form a correlation function, and the separation between peaks in the correlation function depends on the total duration of the symbol plus the guard period.

The resulting measurements are passed to a block 48 for decimation, that is removal of some proportion of the samples. This has the effect of making implementation easier, because it reduces the effective sampling rate.

The input samples are also supplied to a 8k size first-in first-out (FIFO) memory 52. The moving average correlation of the samples over a minimum guard period is then calculated in block 54, and the power of the correlation measured in block 56.

The correlation function is calculated in block 54 by multiplying each input symbol with the symbol obtained at the same time from the delay block 52 with the delay applied thereto, thereby obtaining a measure of the correlation between them. The results are then summed, and a running average is calculated over a number of samples g, which equals the smallest allowed guard interval size, that is, 1/32 of the FFT size. Thus, g=256 samples in 8k mode.

The blocks 44 and 46 therefore form a correlation function, and the separation between peaks in the correlation function depends on the total duration of the symbol plus the guard period.

The resulting measurements are passed to a block 58 for decimation, that is removal of a proportion of the samples, as discussed above.

The samples remaining after decimation in blocks 48 and 58 are then passed through resonators 61-68. Thus samples from block 48 are passed through each of resonators 61-64, while samples from block 58 are passed through each of resonators 65-68.

The resonators can for example be filters, each being centered at a respective resonance frequency.

Each of the resonators has a resonance frequency based on the COFDM symbol frequency of a particular combination of the mode and the guard interval.

Thus, in 2k mode, the active symbol duration is 224µs, while the guard interval can be 1/4, 1/8, 1/16 or 1/32 of the respective symbol duration, namely 56µs, 28µs, 14µs or 7µs. The total duration of the symbol plus the guard period can therefore be 280µs, 252µs, 238µs or 231µs. In 8k mode, the active symbol duration is 896µs, while the guard interval can again be 1/4, 1/8, 1/16 or 1/32 of the respective symbol duration, namely 224µs, 112µs, 56µs or 28µs. The total duration of the symbol plus the guard period can therefore be 1120µs, 1008µs, 952µs or 924µs.

More specifically, each resonant frequency corresponds to the sample rate divided by the number of samples in the FFT and in the guard interval together, after taking account of the sample rate decimation, for one of the possible combinations of the mode and the guard size.

In the preferred embodiment of the invention, the decimator 58 in the 8k path has four times the decimation of the decimator 48 in the 2k path. Specifically, in the preferred embodiment, the decimator 48 decimates by a factor of 8, and the decimator 58 decimates by a factor of 32. The result of this is that the two decimators each produce outputs which contain the same number of samples per symbol.

This means that resonators 61 and 65 can be identical, as can resonators 62 and 66, 63 and 67, and 64 and 68. It is also possible that a single bank of resonators could be provided, shared between the 2k path and the 8k path.

In a preferred embodiment, each of the resonators has a resonance frequency at the third harmonic of the rate derived in the way described above. This is preferred because, while the filtering ability (or quality factor, Q) can increase for higher harmonics, the signal power decreases at higher harmonics. Using the third harmonic is the presently preferred implementation which takes account of these two factors.

The peak power out of each resonator is found over a maximal symbol length, that is, the symbol length if it had a maximum guard. A counter (not shown) is provided at the output of each of the resonators 61-68, and each counter increments when its peak power is largest. The peak powers after each resonator are then compared.

The resonator, whose resonance frequency corresponds most closely to a harmonic of the COFDM symbol frequency for the combination of the mode and the guard interval which is actually in use, will produce the highest output power.

Therefore, the comparison of the resonator peak powers indicates the frequency corresponding to the actual symbol duration (active symbol duration plus guard period) in the received signals.

Thus, by examining the counter values after a number of symbols, the counter with the highest value is determined to be the one which corresponds to the mode (that is 2k or 8k) and guard period used in the transmitted signal.

As described previously, these output parameters can then be used in the further processing of the received signals.

There is therefore described a method of determination of the mode and the guard interval size which allows the FFT size and guard interval size to be detected quickly, even in the presence of relatively large noise signals. The method is robust in noise, and also robust enough to handle signals with severe multipath and/or co-channel interference. Moreover, the method is of low complexity, and can be implemented in a VLSI.

The invention is described with particular reference to the DVB-T standard, but is applicable to any receiver which is intended for use in transmission systems which have multiple available combinations of guard interval and FFT size.

## Claims

1. A method of processing a received signal comprising a plurality of symbols, to determine a size of a guard interval therein, the method comprising:
forming digital samples of the received signal;
delaying the digital samples;
forming a correlation function from the digital samples and the delayed digital samples, the correlation function having peaks, and the separation between peaks in the correlation function depending on a total duration of a symbol plus a guard interval;
passing the correlation function through a plurality of resonators, each of the resonators having a respective resonance frequency which corresponds to a total duration of a symbol plus an available guard interval;
determining the size of the guard interval as being the guard interval corresponding to the resonator with the highest output power.

2. A method as claimed in claim 1, further comprising decimating the correlation function before passing it through the plurality of resonators.

3. A method as claimed in claim 1, wherein each of the resonators has a resonance frequency which corresponds to the sample rate divided by the number of samples in the FFT and in the guard interval together.

4. A method as claimed in claim 3, wherein each of the resonators has a resonance frequency which is an integer multiple of the sample rate divided by the number of samples in the FFT and in the guard interval together.

5. A method as claimed in claim 1, further comprising decimating the correlation function before passing it through the plurality of resonators, wherein each of the resonators has a resonance frequency which is an integer multiple of the sample rate divided by the number of samples in the FFT and in the guard interval together, further divided by a factor by which the correlation function is decimated.

6. A method as claimed in claim 1, wherein the method comprises:
delaying the digital samples by a first amount corresponding to a first available mode of the received signals to form first delayed digital samples, and by a second amount corresponding to a second available mode of the received signals to form second delayed digital samples;
forming a first correlation function from the digital samples and the first delayed digital samples, and forming a second correlation function from the digital samples and the second delayed digital samples;
passing the first and second correlation functions through a plurality of resonators, each of the resonators having a respective resonance frequency which corresponds to a total duration of a symbol in an available mode plus an available guard interval;
determining the mode and the size of the guard interval as being the mode and the guard interval corresponding to the resonator with the highest output power.

7. A method as claimed in claim 6, further comprising decimating the first and second correlation functions before passing them through the plurality of resonators.

8. A method as claimed in claim 7, comprising decimating the first and second correlation functions by different factors, such that the decimated first correlation function and the decimated second correlation function contain the same numbers of samples in each symbol.

9. A receiver circuit, for processing a received signal comprising a plurality of symbols, to determine a size of a guard interval therein, the receiver circuit comprising:
a sampler, for forming digital samples of the received signal;
a delay circuit, for delaying the digital samples;
a correlator, for forming a correlation function from the digital samples and the delayed digital samples, the correlation function having peaks, and the separation between peaks in the correlation function depending on a total duration of a symbol plus a guard interval; and
a plurality of resonators, each for receiving the correlation function, and each of the resonators having a respective resonance frequency which corresponds to a total duration of a symbol plus an available guard interval;
wherein the size of the guard interval is determined as being the guard interval corresponding to the resonator with the highest output power.

10. A receiver circuit as claimed in claim 9, further comprising a decimator, for decimating the correlation function.

11. A receiver circuit as claimed in claim 9, wherein each of the resonators has a resonance frequency which corresponds to the sample rate divided by the number of samples in the FFT and in the guard interval together.

12. A receiver circuit as claimed in claim 11, wherein each of the resonators has a resonance frequency which is an integer multiple of the sample rate divided by the number of samples in the FFT and in the guard interval together.

13. A receiver circuit as claimed in claim 9, further comprising a decimator, for decimating the correlation function, wherein each of the resonators has a resonance frequency which is an integer multiple of the sample rate divided by the number of samples in the FFT and in the guard interval together, further divided by a factor by which the decimator decimates the correlation function.

14. A receiver circuit as claimed in claim 9, wherein the circuit comprises:
a first delay circuit for delaying the digital samples by a first amount corresponding to a first available mode of the received signals to form first delayed digital samples, and a second delay circuit for delaying the digital samples by a second amount corresponding to a second available mode of the received signals to form second delayed digital samples;
wherein the correlator forms a first correlation function from the digital samples and the first delayed digital samples, and a second correlation function from the digital samples and the second delayed digital samples;
wherein the plurality of resonators each have a respective resonance frequency which corresponds to a total duration of a symbol in an available mode plus an available guard interval; and
wherein the mode and the size of the guard interval are determined as being the mode and the guard interval corresponding to the resonator with the highest output power.

15. A receiver circuit as claimed in claim 14, comprising at least one decimator for decimating the first and second correlation functions before passing them through the plurality of resonators.

16. A receiver circuit as claimed in claim 15, comprising a first decimator for decimating the first correlation function by a first decimation factor, and a second decimator for decimating the second correlation function by a second decimation factor, such that the decimated first correlation function and the decimated second correlation function contain the same numbers of samples in each symbol.
